# EUROPEAN PATENT APPLICATION

(11) **EP 4 284 122 A1**
(43) Date of publication of application: **29.11.2023**
(21) Application number: 21921186.9
(22) Date of filing: 04.11.2021
(51) Int. Cl.: H05H 1/24, H04N 5/225, H04N 7/18, F23M 11/04

(54) **MONITORING DEVICE**

(30) Priority: 22.01.2021 JP 2021009094
(71) Applicant: Hitachi Zosen Corporation, Osaka-shi, Osaka 559-8559 (JP); National Institute Of Advanced Industrial Science and Technology, Chiyoda-ku Tokyo 100-8921 (JP)
(72) Inventor: KAWABATA, Kaoru, Osaka-shi, Osaka 559-8559 (JP); ISE, Akifumi, Osaka-shi, Osaka 559-8559 (JP); SEGAWA, Takehiko, Tsukuba-shi, Ibaraki 305-8560 (JP)
(74) Representative: Grünecker Patent- und Rechtsanwälte PartG mbB
(86) International application number: PCT/JP2021/040502
(87) International publication number: WO 2022/158083

(57) **Abstract**

A monitoring device in accordance with an aspect of the present invention includes: a lens (4); a cover (5) covering a circumferential surface of the lens (4); and a plasma actuator (7) including a first electrode (71) that generates, toward a center axis (C) of the cover (5), at least one of a plasma (P) generated by a dielectric barrier discharge and an induced jet flow (F), the plasma actuator (7) removing dust (D) with use of at least one of the plasma (P) and the induced jet flow (F).

## Description

### Technical Field

The present invention relates to a monitoring device, more specifically a monitoring device for monitoring an inside of a furnace.

### Background Art

Conventionally, a combustion furnace in a waste-to-energy plant or the like is provided with a monitoring device for monitoring a state of an inside of the furnace. This type of monitoring device suffers adherence of dust (contaminant) to a lens and the like as a result of combustion. A technique for preventing adherence of dust or removal of dust has therefore been proposed.

For example, Patent Literature 1 discloses a technique of releasing a dust prevention gas toward a tip part side of a lens tube. Patent Literature 2 discloses a technique of attaching, to a tip part side of a lens tube, a rotatable transparent body with blades (propeller mechanism).

### Citation List

### [Patent Literature]

[Patent Literature 1]
   Japanese Utility Model Application Publication, Jitsukaihei, No. 5-647000
[Patent Literature 2]
   Japanese Patent Application Publication, Tokukaihei, No. 2004-96675

### Summary of Invention

### Technical Problem

However, the technique of Patent Literature 1 cannot sufficiently prevent adherence of dust and requires periodical removal (blowing off) of dust by hand. Furthermore, there may be dust that cannot be removed even by hand (for example, dust that has entered an inner circumferential part of an opening) and causes a partial loss of the field of view of a captured image.

Further, the technique of Patent Literature 2 has problems caused by the addition of the propeller mechanism, such as that maintenance of the propeller mechanism is required and that the propeller mechanism undesirably appears in an image captured by a camera. These problems make it difficult to apply the technique of Patent Literature 2.

It is an object of an aspect of the present invention to provide a monitoring device in which narrowing of a field of view due to adherence of dust can be improved without frequent maintenance.

### Solution to Problem

In order to attain the object, a monitoring device in accordance with an aspect of the present invention is a monitoring device for monitoring an inside of a furnace, including: a light guide part guiding light from the inside of the furnace to a camera; a cover having a tubular shape, covering a circumferential surface of the light guide part, and having, in a tip part of the cover on a side of the inside of the furnace, an opening that lets light pass therethrough; and a plasma actuator including a first electrode that generates, toward a center axis of the cover, at least one of (i) a plasma generated by a dielectric barrier discharge and (ii) a jet flow induced due to the plasma, the plasma actuator removing, with use of at least one of the plasma and the jet flow, dust adhering to a surface of the monitoring device which surface faces the inside of the furnace or to an inside of the monitoring device.

### Advantageous Effects of Invention

An aspect of the present invention makes it possible to provide a monitoring device in which narrowing of a field of view due to adherence of dust can be improved without frequent maintenance.

### Brief Description of Drawings

Fig. 1 is a cross-sectional view illustrating a state in which a monitoring device in accordance with Embodiment 1 is attached to a furnace.
Fig. 2 is a cross section showing a main part of the monitoring device illustrated in Fig. 1.
Fig. 3 is a front view of the monitoring device illustrated in Fig. 1, which front view is obtained when the monitoring device is viewed from a tip part side.
Fig. 4 is a cross section showing a main part of a variation of the monitoring device illustrated in Fig. 2.
Fig. 5 is a cross section showing a main part of a variation of the monitoring device illustrated in Fig. 4.
Fig. 6 is a cross section showing a main part of a variation of the monitoring device illustrated in Fig. 2.
Fig. 7 is a cross section showing a main part of a monitoring device in accordance with Embodiment 2.
Fig. 8 is a cross section showing a main part of a monitoring device in accordance with Embodiment 3.
Fig. 9 is an enlarged view schematically illustrating the vicinity of an opening of the monitoring device illustrated in Fig. 8.
Fig. 10 is a schematic view of the monitoring device illustrated in Fig. 8, which schematic view is obtained when the monitoring device is viewed from a tip part side.
Fig. 11 is a cross section showing a main part of a monitoring device in accordance with Embodiment 4.
Fig. 12 is a schematic view of the monitoring device illustrated in Fig. 11, which schematic view is obtained when the monitoring device is viewed from a tip part side.
Fig. 13 is a cross section showing a main part of a monitoring device in accordance with Embodiment 5.
Fig. 14 is a schematic view of the monitoring device illustrated in Fig. 13, which schematic view is obtained when the monitoring device is viewed from a tip part side.
Fig. 15 is a cross section showing a main part of a variation of the monitoring device illustrated in Fig. 13.
Fig. 16 is a cross section showing a main part of a monitoring device in accordance with embodiment 6.
Fig. 17 is a cross section showing a main part of a variation of the monitoring device illustrated in Fig. 16.
Fig. 18 is a cross section showing a main part of a monitoring device in accordance with Embodiment 7.
Fig. 19 is a cross section showing a main part of a monitoring device in accordance with Embodiment 8.
Fig. 20 is a cross section showing a main part of a monitoring device in accordance with Embodiment 9.
Fig. 21 is a schematic view of the monitoring device illustrated in Fig. 20, which schematic view is obtained when the monitoring device is viewed from a tip part side.
Fig. 22 is a cross section showing a main part of a monitoring device in accordance with Embodiment 10.
Fig. 23 is a cross section showing a main part of a monitoring device in accordance with Embodiment 11.

### Description of Embodiments

### Embodiment 1

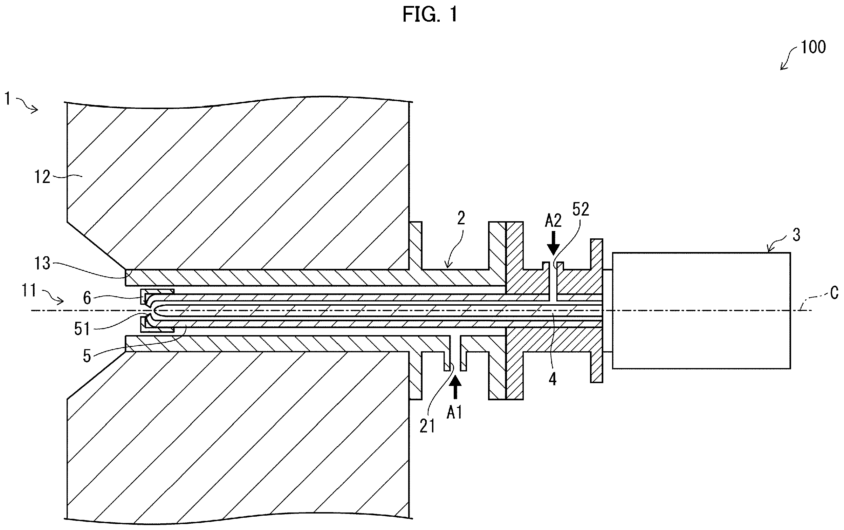

The following will describe an embodiment of the present invention, with reference to Figs. 1 to 6. Note that the following description is an example of a monitoring device in accordance with the present invention, and the technical scope of the present invention is not limited to the examples illustrated in the drawings.

### (Overview of monitoring device)

First, with reference to Fig. 1, an outline of a monitoring device 100 in accordance with Embodiment 1 will be described. Fig. 1 is a cross-sectional view illustrating a state in which the monitoring device 100 in accordance with Embodiment 1 is attached to a furnace 1. In the following description, a side (left side in Fig. 1) facing an inside 11 of the furnace 1 may be referred to as a tip part side, and a side (right side in Fig. 1) opposite to the tip part side may be referred to as a base end part side.

The furnace 1 illustrated in Fig. 1 is, for example, a combustion furnace or a melting furnace, and the inside 11 of the furnace is exposed to a high-temperature atmosphere. The monitoring device 100 is attached to a furnace wall 12, which is a side wall, an upper wall, or the like of the furnace 1, in order to monitor the state of the inside 11 of the furnace. In the illustrated example, a tubular mounting tool 2 is provided in a mounting hole 13 formed in a thickness direction of the furnace wall 12, and a tip part side of the monitoring device 100 is inserted into the mounting hole 13 via the mounting tool 2.

The mounting tool 2 has formed therein a first vent 21 for introducing first sealing air A1 for dust prevention into an inside of the mounting tool 2 is formed in the mounting tool 2. The first sealing air A1 introduced from the first vent 21 flows, from the base end part side toward the tip part side, through a gap between an outer circumferential surface of a cover 5 of the monitoring device 100 and an inner circumferential surface of the mounting tool 2 and is discharged from a tip part side of the mounting tool 2. The introduction of the first sealing air A1 into the inside of the mounting tool 2 prevents dust generated in the inside 11 of the furnace from adhering to a surface of the monitoring device 100 which surface faces the inside 11 of the furnace. The introduction also cools the cover 5 and thus prevents an excessive increase in temperature of the lens (light guide part) 4.

The monitoring device 100 includes a camera 3, the lens 4 which guides light from the inside 11 of the furnace to the camera 3, the tubular cover 5 which covers an outer circumferential surface (circumferential surface) of the lens 4, and an attachment 6 on which a plasma actuator to be described later is mounted. The camera 3 is connected to a base end part side of the lens 4 and captures an image of a state of the inside 11 of the furnace on the basis of the light guided by the lens 4. As the camera 3, for example, a CCD camera or the like is used. The lens 4 and the cover 5 are disposed such that respective center axes C coincide with each other. An opening 51 which lets light pass therethrough is formed at a tip part of the cover 5. The attachment 6 is detachably attached to the tip part of the cover 5 so as to surround a periphery of the opening 51 of the cover 5.

The monitoring device 100 has formed therein a second vent 52 for introducing second sealing air A2 for dust prevention into an inside of the cover 5. The second sealing air A2 introduced from the second vent 52 flows through a gap between the outer circumferential surface of the lens 4 and an inner circumferential surface of the cover 5 from the base end part side toward the tip part side, and is discharged from the opening 51 formed in the tip part of the cover 5. The second sealing air A2 prevents dust generated in the inside 11 of the furnace from adhering to the surface of the monitoring device 100 which surface faces the inside 11 of the furnace, and also prevents an excessive increase in temperature of the lens 4 by cooling the lens 4.

The monitoring device 100 uses the first sealing air A1 and the second sealing air A2 to prevent dust generated in the inside 11 of the furnace from adhering to the monitoring device 100. However, adherence of dust cannot be completely prevented, and dust may adhere to the surface of the monitoring device 100 which surface faces the inside 11 of the furnace. In a case where dust adheres to the monitoring device 100, a part of the field of view of an image captured by the camera 3 may be lost. This makes it difficult to properly monitor the state of the inside 11 of the furnace.

As such, the monitoring device 100 includes the plasma actuator and removes dust adhering to the monitoring device 100 with use of a dielectric barrier discharge (DBD) by the plasma actuator to improve narrowing of the field of view caused by adherence of dust.

In the example illustrated in Fig. 1, the monitoring device 100 is attached to the furnace wall 12 at an angle at which the center axis C vertically intersects with the furnace wall 12 of the furnace 1. Note that the monitoring device 100 can be attached to the furnace wall 12 at an angle at which the center axis C obliquely intersects with the furnace wall 12.

### (Configuration of monitoring device)

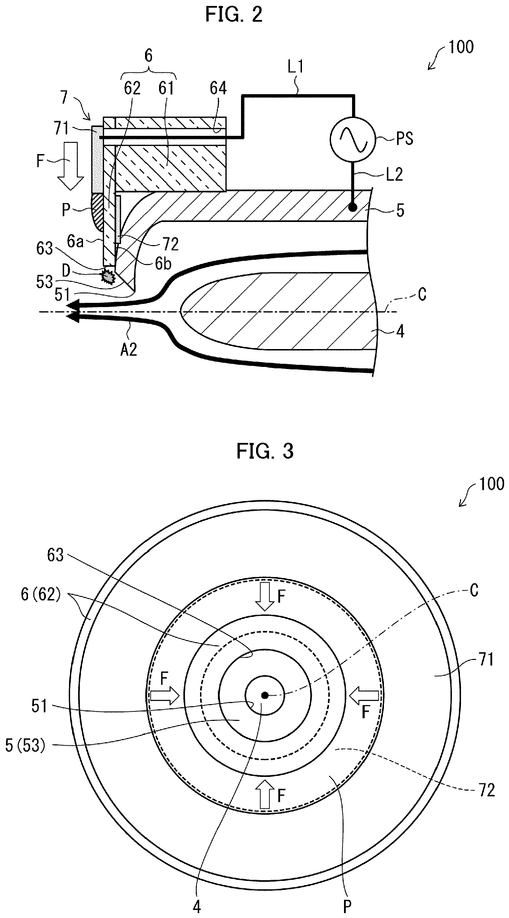

Next, with reference to Figs. 2 and 3, the following will specifically describe a main part of the monitoring device 100 in accordance with Embodiment 1. Fig. 2 is a cross section showing a main part of the monitoring device 100 illustrated in Fig. 1. Fig. 3 is a front view of the monitoring device 100 illustrated in Fig. 1, which front view is obtained when the monitoring device 100 is viewed from the tip part side. As illustrated in Figs. 2 and 3, the monitoring device 100 is configured such that the attachment 6 is mounted on the tip part side of the cover 5 covering the outer circumferential surface of the lens 4. A first electrode 71 and a second electrode 72 of a plasma actuator 7 are disposed on the attachment 6.

The lens 4 is a substantially cylindrical lens tube. The lens 4 has a function of adjusting a focal position of light so that a clear image can be captured by the camera 3. The lens 4 may be, for example, constituted by a plurality of lenses combined together.

The cover 5 is an electrically conductive tubular member. The cover 5 is made of, for example, a metal tube such as SUS. The cover 5 is disposed so as to cover a substantially entire length of the lens 4 from a tip part side of the lens 4 to a base end part side of the lens 4. The tip part of the cover 5 curvilinearly bends toward the center axis C. A circular opening 51 having a center on the center axis C is formed in the tip part. The opening 51 is formed to have a smaller diameter than an inner diameter of the cover 5. In a case where an opening area of the opening 51 is thus relatively reduced, dust D generated in the inside 11 of the furnace is less likely to infiltrate the inside of the cover 5 through the opening 51. At a peripheral part surrounding the opening 51, an inclined surface 53 which is inclined toward the base end part side with respect to the center axis C is formed.

The attachment 6 is a mounting tool for attaching the plasma actuator 7 to the cover 5. In Embodiment 1, the attachment 6 is made of a dielectric (insulator). Examples of the dielectric (insulator) include machinable ceramics, high temperature co-fired ceramics (HTCC), low temperature co-fired ceramics (LTCC), a stacked package thereof, and sapphire glass. The attachment 6 is constituted by the following two members: a cylindrical tubular part 61 which fits on the outer circumferential surface of the cover 5; and a disk-shaped tip wall 62 which is provided on a tip part side of the tubular part 61. The tip wall 62 has formed therein a circular opening 63 having a center on the center axis C. The opening 63 of the attachment 6 is formed to have a diameter larger than that of the opening 51 of the cover 5 so that the inclined surface 53 of the cover 5 is exposed at a tip part of the monitoring device 100. Light from the inside 11 of the furnace passes through the opening 63 of the attachment 6 and the opening 51 of the cover 5 and enters the lens 4.

The plasma actuator 7 is a device that generates a plasma P and an induced jet flow (jet flow) F by a dielectric barrier discharge. The plasma actuator 7 includes the first electrode 71 and the second electrode 72. Each of the first electrode 71 and the second electrode 72 has an annular shape (ring shape) and is disposed to have a center on the center axis C. The first electrode 71 is formed to have a diameter larger than that of the second electrode 72, and an inner diameter of the first electrode 71 is substantially equal to an outer diameter of the second electrode 72.

The first electrode 71 and the second electrode 72 can each have one or more gaps formed in part thereof. In a case where, for example, a plurality of gaps separate each electrode into segments, maintaining the segments to be at the same electric potential allows forming electrodes that are disposed in an annular shape as a whole. Segmenting each electrode in this way provides, for example, the following remarkable effect. That is, by disposing each electrode such that the respective positions of the gaps are displaced from each other at a constant angle in a circumferential direction of the center axis C, it is possible to generate an induced jet flow F swirling around the center axis C. Note that the first electrode 71 and the second electrode 72 are each not limited to a circular annular shape. The first electrode 71 and the second electrode 72 may each have an annular shape other than a circular shape, such as a polygonal shape, for example.

The first electrode 71 and the second electrode 72 are disposed with the tip wall 62 of the attachment 6 interposed therebetween. The first electrode 71 is disposed on a front surface 6a of the tip wall 62 of the attachment 6, which front surface 6a is on the tip part side of the tip wall 62. The first electrode 71 may be disposed such that all or part of the first electrode 71 is embedded in the attachment 6. The second electrode 72 is disposed on a back surface 6b of the tip wall 62 of the attachment 6, which back surface 6b is on a base end part side (side opposite to the front surface 6a) of the tip wall 62. More specifically, in a gap formed between the cover 5 and the attachment 6, the second electrode 72 is disposed on the back surface 6b while being in contact with the tip part of the cover 5.

The first electrode 71 and the second electrode 72 are electrically connected to an AC power supply PS. The AC power supply PS is a power supply capable of outputting a high voltage having, for example, a sine waveform or a pulse waveform at a high frequency. In the illustrated example, the first electrode 71 is electrically connected to the AC power supply PS via a first wire L1. The first wire L1 has one end connected to the AC power supply PS and the other end connected to the first electrode 71 through a through hole 64 for wiring formed in the attachment 6. The second electrode 72 is electrically connected to the AC power supply PS via the electrically conductive cover 5 and a second wire L2. The second wire L2 has one end connected to the AC power supply PS and the other end connected to the electrically conductive cover 5.

It is not essential that the attachment 6 has formed therein the through hole 64 through which the first wire L1 is passed. In this case, the other end of the first wire L1 may be connected to the first electrode 71 through an outside of the attachment 6 so that the first electrode 71 and the AC power supply PS are electrically connected to each other.

The plasma actuator 7 has the annular first electrode 71 and the annular second electrode 72 disposed in the manner described above such that the tip wall 62 of the attachment 6 made of a dielectric is interposed between the first electrode 71 and the second electrode 72. As such, when a high-frequency voltage is applied by the AC power supply PS, a dielectric barrier discharge is generated along the front surface 6a of the attachment 6. This causes a plasma P to be generated in the vicinity of an inner diameter side edge of the annular first electrode 71. Further, charged particles resulting from the production of the plasma P are accelerated by an electric field, and ambient air is induced, so that an induced jet flow F toward the center axis C is generated.

The plasma actuator 7 removes dust D adhering to the monitoring device 100, with use of at least one of a plasma P caused by a dielectric barrier discharge and an induced jet flow F. For example, the plasma actuator 7 breaks down dust D adhering to the monitoring device 100, with use of a plasma P caused by a dielectric barrier discharge. The plasma actuator 7 also scatters dust D adhering to the monitoring device 100, with use of an induced jet flow F caused by a dielectric barrier discharge. Alternatively, the plasma actuator 7 breaks down and scatters dust D adhering to the monitoring device 100, with use of both a plasma P caused by a dielectric barrier discharge and an induced jet flow F.

Thus, the plasma actuator 7 makes it possible to remove dust D that cannot be dealt with conventionally and thus to improve narrowing of the field of view of the monitoring device 100 caused by adherence of the dust D.

In the above description, an example has been described in which the attachment 6 made of a dielectric is constituted by the following two members: the tubular part 61 and the tip wall 62. However, the attachment 6 may consist of a single member in which the tubular part 61 and the tip wall 62 are integrally formed. Further, in order for the plasma actuator 7 to generate a dielectric barrier discharge, it is sufficient that at least the tip wall 62 is made of a dielectric having a high insulation property. As such, the tubular part 61 may be made of a material other than a dielectric having a high insulation property. This makes it possible to reduce the manufacturing cost of the attachment 6.

### (Control of monitoring device)

Next, an example of control of the monitoring device 100 will be described. The monitoring device 100 may control the plasma actuator 7 to generate a dielectric barrier discharge continuously or intermittently. The monitoring device 100 may also generate a dielectric barrier discharge in accordance with a state of dust D adherence, an amount of dust D generated, or the like.

For example, the monitoring device 100 may process an image captured by the camera 3 and, in a case where it is determined from the captured image that there is adherent dust D, generate a dielectric barrier discharge.

The monitoring device 100 may also detect, with use of a sensor, an amount of waste introduced to the furnace 1, a speed of a grate, an evaporation amount, and/or the like, and generate a dielectric barrier discharge by predicting an amount of fly ash generated in accordance with value(s) thus detected.

The monitoring device 100 may adjust an intensity of an electric current of the dielectric barrier discharge, a frequency of the dielectric barrier discharge, and/or a direction of an air stream (induced jet flow F) in accordance with a degree of adherence of dust D and/or a position to which dust D is adhering.

Further, the monitoring device 100 may include a plurality of first electrodes 71 so as to maximize an induced jet flow F, and a timing of generating an electric barrier discharge may be adjusted.

### (Effect of monitoring device)

As described above, the monitoring device 100 in accordance with Embodiment 1 includes: the lens 4 guiding light from the inside 11 of the furnace to the camera 3; the cover 5 having a tubular shape, covering the outer circumferential surface of the lens 4, and having, in the tip part of the cover 5 on the side of the inside 11 of the furnace, the opening 51 that lets light pass therethrough; and the plasma actuator 7 including the first electrode 71 that generates, toward the center axis C of the cover 5, at least one of (i) a plasma P generated by a dielectric barrier discharge and (ii) an induced jet flow F induced due to the plasma P, the plasma actuator 7 removing, with use of at least one of the plasma P and the induced jet flow F, dust D adhering to the surface of the monitoring device 100 which surface faces the inside 11 of the furnace.

Since dust D adhering to the monitoring device 100 is removed by a dielectric barrier discharge, the monitoring device 100 makes it possible to remove dust D that cannot conventionally be handled. As such, in accordance with Embodiment 1, it is possible to provide the monitoring device 100 in which narrowing of the field of view due to adherence of dust D can be improved without frequent maintenance.

The monitoring device 100 is preferably configured such that the first electrode 71 is disposed at the opening 51 of the cover 5 or at a side closer to the inside 11 of the furnace than the opening 51. This makes it possible to generate a dielectric barrier discharge at or in the vicinity of the opening 51 of the cover 5 where adherence of dust D is particularly likely to occur, and to thereby remove the dust D.

The monitoring device 100 is preferably configured such that the plasma actuator 7 has the annular first electrode 71 disposed concentrically with the opening 51 of the cover 5. This makes it possible to generate a dielectric barrier discharge in the vicinity of the opening 51 of the cover 5 and remove the dust D.

The monitoring device 100 is preferably configured such that the plasma actuator 7 is provided to the attachment 6. This facilitates attachment and detachment of the plasma actuator 7 to and from the cover 5, thereby improving maintainability of the monitoring device 100.

The monitoring device 100 is preferably configured such that the attachment 6 is made of a dielectric. This allows the attachment 6 to function as a dielectric necessary for dielectric barrier discharge. As a result, the number of components of the monitoring device 100 (plasma actuator 7) can be reduced, and the device configuration can be simplified.

### (Variation)

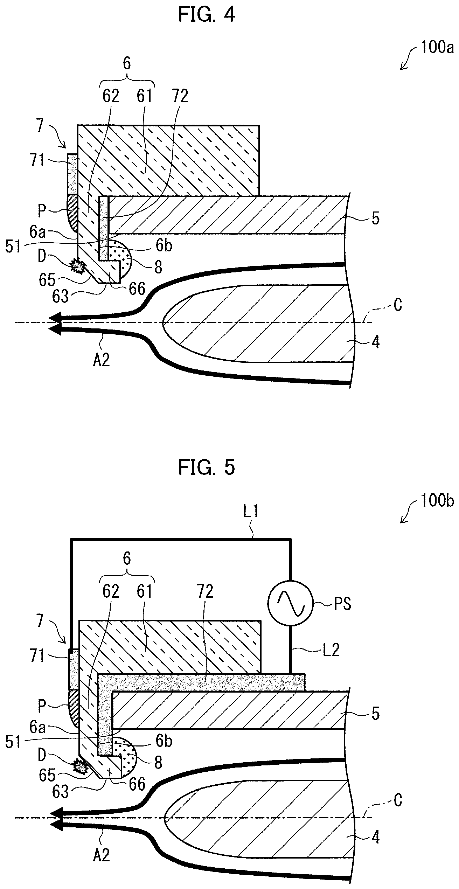

Fig. 4 is a cross section showing a main part of a monitoring device 100a, which is a variation of the monitoring device 100 illustrated in Fig. 2. As illustrated in Fig. 4, in the monitoring device 100a, a tip part side of a cover 5 is not bent toward a center axis C, and an opening 51 having the same diameter as an inner diameter of the cover 5 is formed in a tip part of the cover 5.

An attachment 6 consists of a single member in which a tubular part 61 and a tip wall 62 are integrally formed. An opening 63 of the attachment 6 is formed to have a smaller diameter than the opening 51 of the cover 5. On a front surface 6a of the attachment 6, an inclined surface 65 inclined toward a base end part side with respect to the center axis C is formed at a peripheral part surrounding the opening 63. On a back surface 6a of the attachment 6, a annular protrusion 66 protruding toward a lens 4 side (base end part side) is formed at a peripheral part surrounding the opening 63. A second electrode 72 is disposed on a part of the back surface 6b excluding the annular protrusion 66. Further, insulation putty 8 having fire resistance is disposed so as to cover a part of the second electrode 72 which part is located on a side of the annular protrusion 66.

In a case where a dielectric barrier discharge is generated by the plasma actuator 7, a creepage discharge occurs along the front surface 6a of the attachment 6. As such, in a case where a creepage distance between the first electrode 71 and the second electrode 72 is small, there is a possibility that the first electrode 71 and the second electrode 72 are short-circuited. Thus, in order to prevent the short circuit, it is preferable to secure as great a creepage distance as possible between the first electrode 71 and the second electrode 72. There can be a case, however, that due to issues such as space, the creepage distance between the first electrode 71 and the second electrode 72 cannot be sufficiently secured.

As such, the monitoring device 100a includes the annular protrusion 66 and the insulation putty 8 and prevents a short circuit between a first electrode 71 and a second electrode 72 with use of the annular protrusion 66 and the insulation putty 8. This makes it possible to suitably prevent a short circuit between the first electrode 71 and the second electrode 72 without increasing the size of the device configuration of the monitoring device 100a.

Fig. 5 is a cross section showing a main part of a monitoring device 100b, which is a variation of the monitoring device 100a illustrated in Fig. 4. As illustrated in Fig. 5, in the monitoring device 100b, a second electrode 72 is disposed throughout a gap between a cover 5 and an attachment 6, and a part of the second electrode 72 is exposed on an outer circumferential surface of the cover 5. As such, in the monitoring device 100b, the second electrode 72 and an AC power supply PS are directly connected to each other by a second wire L2 without involvement of the cover 5, so that the second electrode 72 and the AC power supply PS are electrically connected to each other. Thus, in the monitoring device 100b, the cover 5 does not need to be electrically conductive, and the cover 5 can be formed of a material that is not electrically conductive.

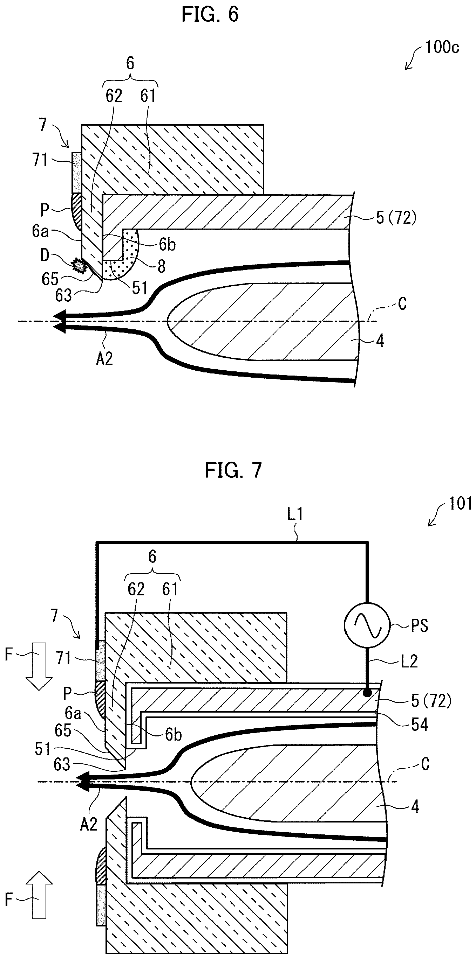

Fig. 6 is a cross section showing a main part of a monitoring device 100c, which is a variation of the monitoring device 100 illustrated in Fig. 2. As illustrated in Fig. 6, in the monitoring device 100c, a cover 5 has a tip part side thereof bent at an angle of substantially 90 degrees toward a center axis C side. As such, when an attachment 6 is attached to a tip part of the cover 5, substantially no gap is formed between the cover 5 and the attachment 6.

In the monitoring device 100c, the cover 5, which is electrically conductive, functions as a second electrode 72. This eliminates the need to provide a second electrode 72 to the attachment 6, so that the number of components of the monitoring device 100 can be reduced, and the device configuration can be simplified.

In general, a plasma P is more likely to be generated as the gas density is smaller. The inside of the cover 5 has a relatively high gas density compared to the outside (inside of the furnace 11) and thus tends to be an environment in which the plasma P is not easily generated. As such, it may be possible, depending on an internal pressure of the cover 5, to reduce a risk that an induced jet flow F induced due to a plasma P may be circulated into the inside of the cover 5. It is therefore not essential to provide the insulation putty 8. However, in case that of the induced jet flow F occurs, it is preferable to provide the insulation putty 8 in order to more reliably prevent a short circuit.

### Embodiment 2

The following description will discuss another embodiment of the present invention. For convenience, members which are identical in function to the members described in the above embodiment are given respective identical reference signs, and descriptions of those members are not repeated.

### (Configuration of monitoring device)

Fig. 7 is a cross section showing a main part of a monitoring device 101 in accordance with Embodiment 2. The monitoring device 101 differs from the above-described monitoring devices primarily in that a cover 5 is ceramic-coated.

As illustrated in Fig. 7, in the monitoring device 101, the cover 5 which is electrically conductive functions as a second electrode 72. A ceramic layer 54 is formed on a surface of the cover 5. The coating of the cover 5 with the ceramic layer 54 prevents a short circuit between a first electrode 71 and the cover 5 caused by a dielectric barrier discharge.

The ceramic layer 54 may be formed only at a tip part of the cover 5 and in the vicinity thereof. In a case where a dielectric barrier discharge is generated, a creepage discharge occurs along a front surface 6a of an attachment 6. As such, even in a case where the ceramic layer 54 is formed only at the tip part of the cover 5 and in the vicinity thereof, a short circuit between the first electrode 71 and the cover 5 caused by a dielectric barrier discharge can be prevented.

### (Effect of monitoring device)

As described above, in the monitoring device 101 in accordance with Embodiment 2, the ceramic layer 54 is formed on the cover 5. As such, in a case where the cover 5 which is electrically conductive is caused to function as the second electrode 72 of the plasma actuator 7, a short circuit caused by a dielectric barrier discharge is prevented. This makes it possible to increase the safety of the monitoring device 101.

### Embodiment 3

The following description will discuss another embodiment of the present invention. For convenience, members which are identical in function to the members described in the any of the above embodiments are given respective identical reference signs, and descriptions of those members are not repeated.

### (Configuration of monitoring device)

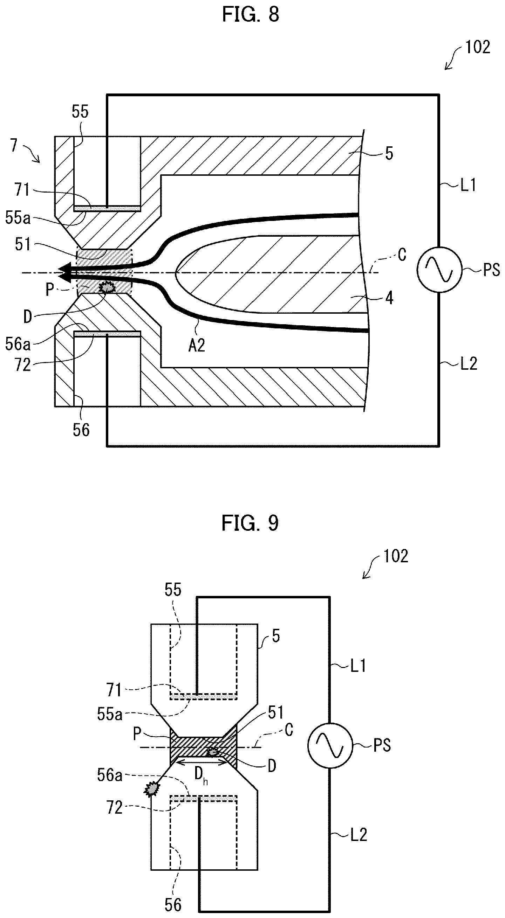

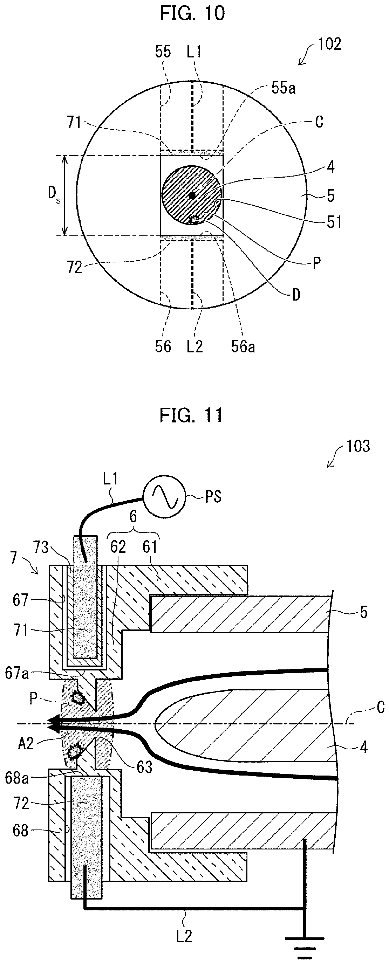

Fig. 8 is a cross section showing a main part of a monitoring device 102 in accordance with Embodiment 3. Fig. 9 is an enlarged view schematically illustrating the vicinity of an opening 51 of the monitoring device 102 illustrated in Fig. 8. Fig. 10 is a schematic view of the monitoring device 102 illustrated in Fig. 8, which schematic view is obtained when the monitoring device 102 is viewed from a tip part side. The monitoring device 102 differs from the above-described monitoring devices primarily in that an attachment 6 is formed integrally with a cover 5.

As illustrated in Figs. 8 to 10, in the monitoring device 102, the attachment 6 is formed integrally with the cover 5, and a plasma actuator 7 is mounted on the cover 5. The cover 5 is made of a dielectric with a high insulation property (a material having an insulation property) such as sapphire glass. On a tip part side of the cover 5, a first accommodation recess 55 and a second accommodation recess 56 are formed from an outer circumferential surface of the cover 5 toward an opening 51, at respective positions where the first accommodation recess 55 and the second accommodation recess 56 face each other with an opening 51 interposed therebetween. Respective bottom parts (deep parts) 55a and 56a of the first accommodation recess 55 and the second accommodation recess 56 face each other with the opening 51 interposed therebetween.

The plasma actuator 7 includes a first electrode 71 and a second electrode 72, each of which has a plate-like shape. The first electrode 71 is accommodated in the bottom part 55a of the first accommodation recess 55. The second electrode 72 is accommodated in the bottom part 56a of the second accommodation recess 56. The first electrode 71 and the second electrode 72 face each other with the opening 63 (center axis C) interposed therebetween.

The plasma actuator 7 has the first electrode 71 and the second electrode 72 disposed with the cover 5 made of a dielectric interposed therebetween. As such, when a high-frequency voltage is applied by an AC power supply PS, a dielectric barrier discharge is generated between the first electrode 71 and the second electrode 72, so that a plasma P is generated. This makes it possible to remove dust adhering to the opening 51 of the cover 5.

Note that serrations can be formed on surfaces of the first electrode 71 and the second electrode 72. This makes it possible to more uniformly generate a dielectric barrier discharge.

The cover 5 can be made of a material other than sapphire glass. The cover 5 can also be made of, for example, quartz glass or a machinable ceramic. This makes it possible to reduce the manufacturing cost of the cover 5.

In a case where a length Dₕ of the opening 51 (the first electrode 71 and the second electrode 72) of the cover 5 in the center axis C direction is too great, an image captured by the camera 3 may be affected. As such, the length Dₕ is appropriately set to a size that does not affect the captured image.

Further, in a case where a space Dₛ between the first electrode 71 and the second electrode 72 is too large, it is necessary to apply a high voltage in order to generate a dielectric barrier discharge. In view of this, the space Dₛ is appropriately set on the basis of dimensions of the opening 51, a voltage to be applied, and the like.

### (Effect of monitoring device)

As described above, in the monitoring device 102 in accordance with Embodiment 3, the first electrode 71 and the second electrode 72 are disposed with the opening 51 (center axis C) of the cover 5 interposed therebetween. As such, with the monitoring device 102, dust D adhering to the opening 51 of the cover 5 can be removed by a dielectric barrier discharge. Further, the attachment 6 can be omitted in the monitoring device 102, the number of components of the monitoring device 102 can be reduced, and the device configuration can be simplified.

### Embodiment 4

The following description will discuss another embodiment of the present invention. For convenience, members which are identical in function to the members described in the any of the above embodiments are given respective identical reference signs, and descriptions of those members are not repeated.

### (Configuration of monitoring device)

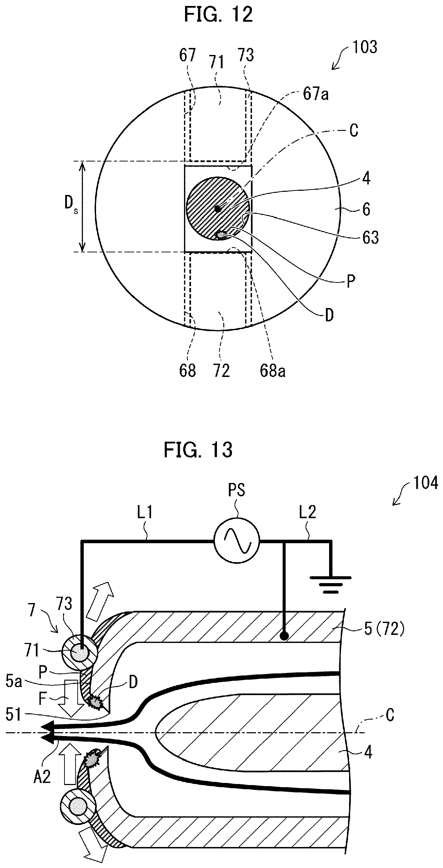

Fig. 11 is a cross section showing a main part of a monitoring device 103 in accordance with Embodiment 4. Fig. 12 is a schematic view of the monitoring device 103 illustrated in Fig. 11, which schematic view is obtained when the monitoring device 103 is viewed from a tip part side. The monitoring device 103 differs from the above-described monitoring devices primarily in that a first electrode 71 and a second electrode 72 are embedded in an attachment 6.

In the monitoring device 103, a cover 5 is made of a metal, and the attachment 6 is made of a machinable ceramic. As illustrated in Figs. 11 and 12, in a tip wall 62 of the attachment 6, circular first accommodation recess 67 and a circular second accommodation recess 68 are formed from an outer circumferential surface of the attachment 6 toward an opening 63, at respective positions where the first accommodation recess 67 and the second accommodation recess 68 face each other with an opening 63 interposed therebetween. Respective bottom parts (deep parts) 67a and 68a of the first accommodation recess 67 and the second accommodation recess 68 face each other with the opening 63 interposed therebetween.

A plasma actuator 7 includes a first electrode 71 and a second electrode 72, each of which has a pillar shape. The first electrode 71 is inserted into a bottomed cylindrical sapphire glass tube 73, which is made of sapphire glass. The first electrode 71 is accommodated in the first accommodation recess 67 while being inserted into the sapphire glass tube 73. The second electrode 72 is accommodated in the second accommodation recess 68. The first electrode 71 and the second electrode 72 face each other with the opening 63 (center axis C) interposed therebetween.

The plasma actuator 7 has the first electrode 71 and the second electrode 72 disposed such that the sapphire glass tube 73 and the attachment 6 made of the machinable ceramic are interposed between the first electrode 71 and the second electrode 72. As such, when a high-frequency voltage is applied by an AC power supply PS, a dielectric barrier discharge is generated between the first electrode 71 and the second electrode 72, so that a plasma P is generated. This makes it possible to remove dust D adhering to the opening 63 of the attachment 6.

Note that the sapphire glass tube 73 may be attached not only to the first electrode 71 but also to the second electrode 72. However, not attaching the sapphire glass tube 73 to the second electrode 72 reduces a space Dₛ between the first electrode 71 and the second electrode 72 is reduced. This makes it possible to reduce a voltage for generating a dielectric barrier discharge.

### (Effect of monitoring device)

As described above, in the monitoring device 103 in accordance with Embodiment 4, the plasma actuator 7 includes the first electrode 71 and the second electrode 72, each of which has a pillar shape, and the first electrode 71 and the second electrode 72 are disposed with the opening 63 (center axis C) of the attachment 6 interposed therebetween. As such, with the monitoring device 103, dust D adhering to the opening 63 of the attachment 6 can be removed by a dielectric barrier discharge.

### Embodiment 5

The following description will discuss another embodiment of the present invention. For convenience, members which are identical in function to the members described in the any of the above embodiments are given respective identical reference signs, and descriptions of those members are not repeated.

### (Configuration of monitoring device)

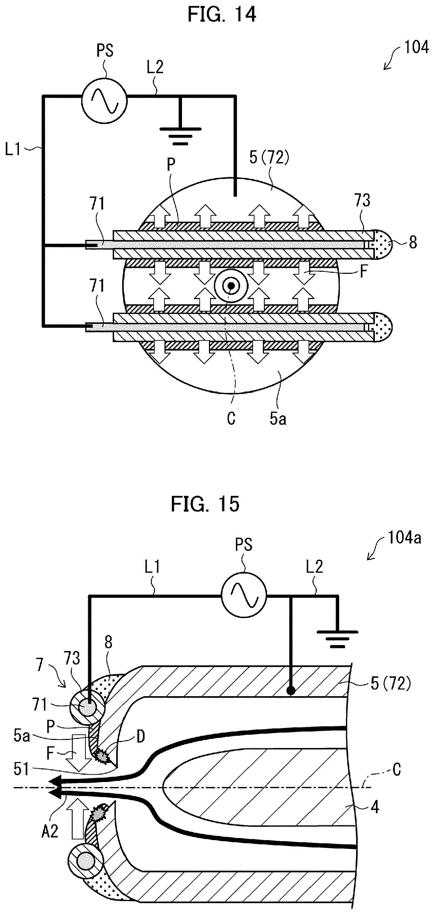

Fig. 13 is a cross section showing a main part of a monitoring device 104 in accordance with Embodiment 5. Fig. 14 is a schematic view of the monitoring device 104 illustrated in Fig. 13, which schematic view is obtained when the monitoring device 104 is viewed from a tip part side. The monitoring device 104 differs from the above-described monitoring devices primarily in that a first electrode 71 is made of a string-shaped metal wire.

As illustrated in Figs. 13 and 14, in the monitoring device 104, a plasma actuator 7 includes two first electrodes 71 each made of a string-shaped metal wire. Each of the first electrodes 71 is inserted into a cylindrical sapphire glass tube 73, which is made of sapphire glass. One end of the sapphire glass tube 73 is closed by insulation putty 8. Instead of the sapphire glass tube 73, an insulation tube made of, for example, a material having an insulating property such as ceramics may be used.

The first electrodes 71 are disposed on a surface 5a of the cover 5 on a tip part side of the cover 5 so as to be parallel to each other with an opening 51 (center axis C) interposed therebetween. As such, when a high-frequency voltage is applied by an AC power supply PS, a dielectric barrier discharge is generated along the surface 5a of the cover 5, so that a plasma P is generated in the vicinity of a side surface of each of the string-shaped first electrodes 71. Further, ambient air is induced by the plasma P, so that an induced jet flow F toward the center axis C and an induced jet flow F toward a side opposite to the center axis C are generated. This makes it possible to remove dust D adhering to the opening 51 of the cover 5.

### (Effect of monitoring device)

As described above, in the monitoring device 104 in accordance with Embodiment 5, the plasma actuator 7 includes the two first electrodes 71, each of which is in the form of a line, and the two first electrodes 71 are disposed with the opening 51 (center axis C) of the cover 5 interposed therebetween. As such, with the monitoring device 104, dust D adhering to the opening 51 of the cover 5 can be removed by a dielectric barrier discharge.

### (Variation)

Fig. 15 is a cross section showing a main part of a monitoring device 104a, which is a variation of the monitoring device 104 illustrated in Fig. 13. As illustrated in Fig. 15, in the monitoring device 104a, on outer sides of two first electrodes 71 that face each other with an opening 51 (center axis C) of a cover 5 interposed therebetween, insulation putty 8 is further provided such that a sapphire glass tube 73 is interposed between the first electrodes 71. The provision of the insulation putty 8 inhibits generation of a dielectric barrier discharge toward a side opposite to the opening 51 of the cover 5 (center axis C). It is therefore possible to generate a dielectric barrier discharge toward the opening 51 (center axis C).

### Embodiment 6

The following description will discuss another embodiment of the present invention. For convenience, members which are identical in function to the members described in the any of the above embodiments are given respective identical reference signs, and descriptions of those members are not repeated.

### (Configuration of monitoring device)

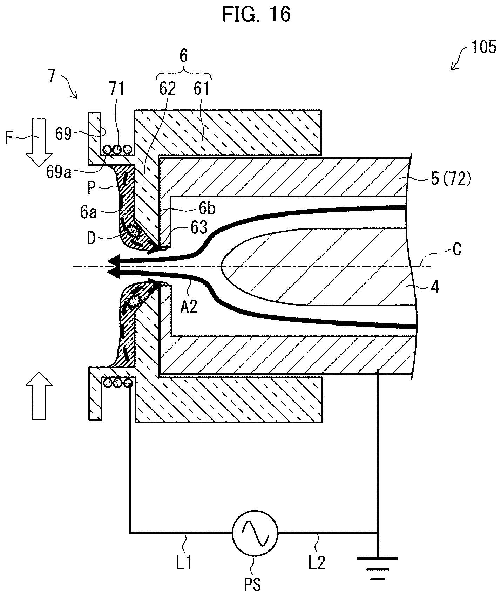

Fig. 16 is a cross section showing a main part of a monitoring device 105 in accordance with Embodiment 6. The monitoring device 105 differs from the above-described monitoring devices primarily in that a first electrode 71 is made of a coiled metal wire.

As illustrated in Fig. 16, in the monitoring device 102, an attachment 6 includes an annular accommodation recess 69 that is formed so as to protrude from a front surface 6a of the attachment 6 toward an inside 11 of the furnace. The accommodation recess 69 is open in a direction opposite to an opening 63 (center axis C) and is provided annularly so as to surround the opening 63. The attachment 6 is made of a dielectric such as a machinable ceramic, sapphire glass, or the like.

A plasma actuator 7 includes the first electrode 71 made of a coiled metal wire. The coiled first electrode 71 is disposed in the accommodation recess 69 of the attachment 6 while being wound around a bottom part (deep part) 69a of the accommodation recess 69. That is, the coiled first electrode 71 is disposed so as to surround an opening 51 (center axis C) of the cover 5. As such, when a high-frequency voltage is applied by an AC power supply PS, a dielectric barrier discharge is generated along the front surface 6a of the attachment 6, so that a plasma P is generated in the vicinity of an inner diameter side of the coiled first electrode 71. Further, ambient air is induced by the plasma P, so that an induced jet flow F toward the center axis C is generated. This makes it possible to remove dust D adhering to the opening 63 of the attachment 6.

### (Effect of monitoring device)

As described above, in the monitoring device 105 in accordance with Embodiment 6, the plasma actuator 7 includes the coiled first electrode 71, and the coiled first electrode 71 is disposed so as to surround the opening 51 of the cover 5. As such, with the monitoring device 105, dust D adhering to the opening 63 of the attachment 6 can be removed by a dielectric barrier discharge.

### (Variation)

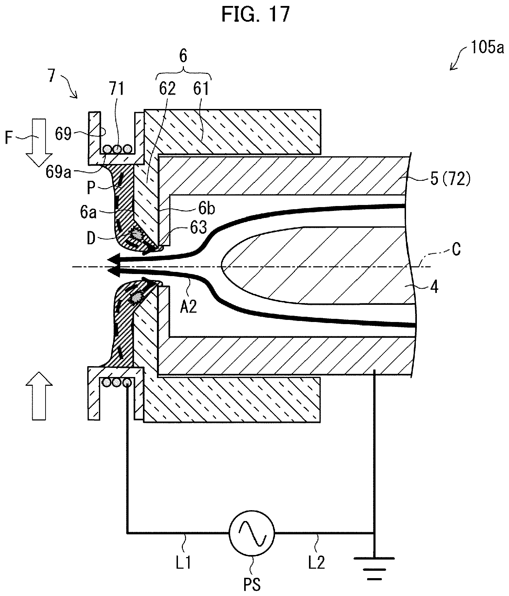

Fig. 17 is a cross section showing a main part of a monitoring device 105a, which is a variation of the monitoring device 105 illustrated in Fig. 16. As illustrated in Fig. 17, in the monitoring device 105a, an accommodation recess 69 of an attachment 6 is made of a material different from those of the other portions (a tubular part 61 and a tip wall 62) of the attachment 6. For example, the attachment 6 has a hybrid structure in which the accommodation recess 69 is made of sapphire glass and portions of the attachment 6 other than the accommodation recess 69 are made of a machinable ceramic. In a case where the portions other than the accommodation recess 69 are made of a machinable ceramic, the manufacturing cost of the attachment 6 can be reduced.

### Embodiment 7

The following description will discuss another embodiment of the present invention. For convenience, members which are identical in function to the members described in the any of the above embodiments are given respective identical reference signs, and descriptions of those members are not repeated.

### (Configuration of monitoring device)

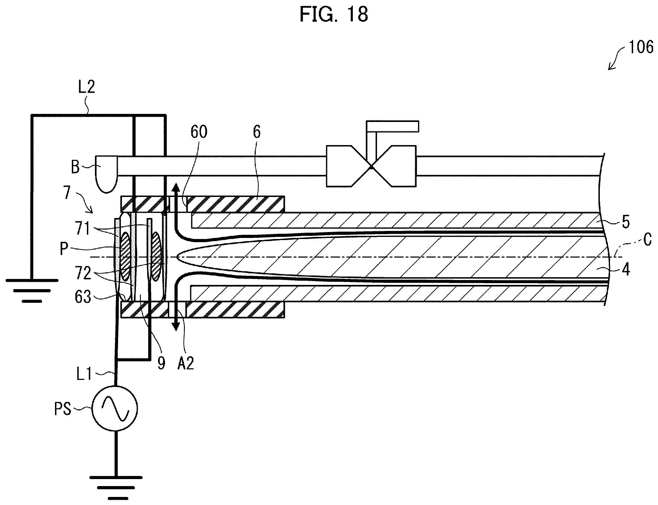

Fig. 18 is a cross section showing a main part of a monitoring device 106 in accordance with Embodiment 7. The monitoring device 106 differs from the above-described monitoring devices primarily in that an opening 63 of an attachment 6 is closed by a dielectric 9.

As illustrated in Fig. 18, in the monitoring device 106, a plasma actuator 7 includes the dielectric 9. A center part of the dielectric 9 is transparent in order to secure the field of view of a lens 4. To the dielectric 9, two first electrodes 71 and two second electrodes 72 are disposed alternately in a direction of a center axis C. The two sets, each consisting of a first electrode 71 and a second electrode 72, are disposed, for example, on a tip part side and a base end part side of the dielectric 9, respectively, so as to surround a periphery of the dielectric 9. The dielectric 9 is disposed so as to close the opening 63 of the attachment 6. As such, an exhaust port 60 is formed in a circumferential wall of the attachment 6, so that second sealing air A2 is discharged from the exhaust port 60.

The monitoring device 106 includes a blower B for blowing air along a tip part side of the opening 63 of the attachment 6. The blower B scatters dust D that cannot be removed by an induced jet flow F caused by a dielectric barrier discharge of the plasma actuator 7.

The plasma actuator 7 is configured such that each first electrode 71 and each second electrode 72 are disposed with the dielectric 9 interposed therebetween. As such, when a high-frequency voltage is applied by an AC power supply PS, a dielectric barrier discharge is generated, so that a plasma P is generated between each first electrode 71 and each second electrode 72.

### (Effect of monitoring device)

As described above, in the monitoring device 106 in accordance with Embodiment 7, the dielectric 9 is disposed so as to close the opening 63 of the attachment 6. As such, with the monitoring device 106, dust D generated in the inside 11 of the furnace is less likely to infiltrate an inside of the monitoring device 106. This makes it possible to prevent the dust D from adhering to the lens 4 and the cover 5.

### Embodiment 8

The following description will discuss another embodiment of the present invention. For convenience, members which are identical in function to the members described in the any of the above embodiments are given respective identical reference signs, and descriptions of those members are not repeated.

### (Configuration of monitoring device)

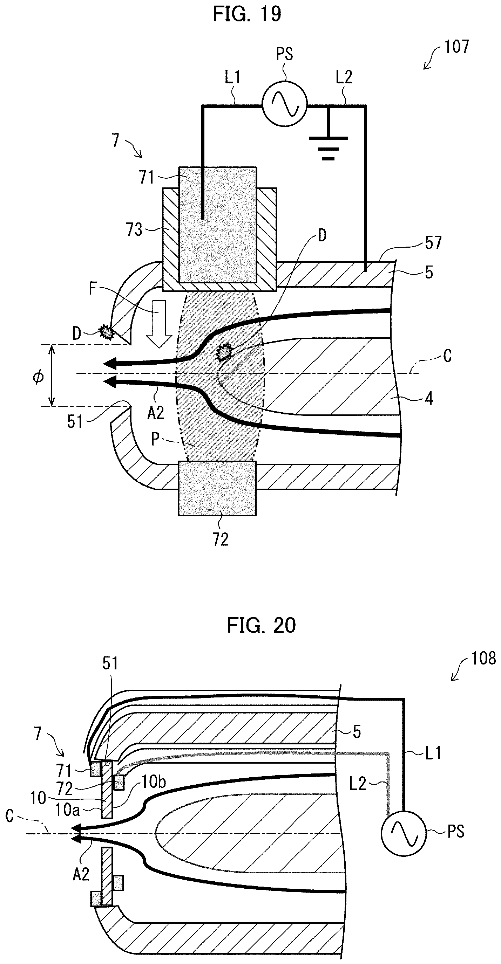

Fig. 19 is a cross section showing a main part of a monitoring device 107 in accordance with Embodiment 8. The monitoring device 107 differs from the above-described monitoring devices primarily in that a first electrode 71 and a second electrode 72 are disposed at a circumferential wall of a cover 5.

As illustrated in Fig. 19, in the monitoring device 107, a plasma actuator 7 includes the first electrode 71 and the second electrode 72, each of which has a pillar shape. The first electrode 71 is inserted into a bottomed cylindrical sapphire glass tube 73, which is made of sapphire glass. The first electrode 71 is penetrated into the circumferential wall 57 of the cover 5 in a thickness direction while being inserted into the sapphire glass tube 73. The second electrode 72 is penetrated into the circumferential wall 57 of the cover 5 in the thickness direction. The first electrode 71 and the second electrode 72 are disposed at positions where the first electrode 71 and the second electrode 72 face each other with the lens 4 interposed therebetween. As such, when a high-frequency voltage is applied by an AC power supply PS, a dielectric barrier discharge is generated, so that a plasma P is generated between the first electrode 71 and the second electrode 72. Further, ambient air is induced by the plasma P, so that an induced jet flow F from the first electrode 71 toward the lens 4 is generated. Thus, dust D adhering to a tip part of the lens 4 can be removed by the dielectric barrier discharge.

The shapes of the first electrode 71 and the second electrode 72 are not limited to a columnar shape. The first electrode 71 and the second electrode 72 can each, for example, have a shape other than a pillar shape, such as a plate-like shape. Also in the monitoring device 107, the cover 5 which is electrically conductive can be caused to function as the second electrode 72.

### (Effect of monitoring device)

As described above, in the monitoring device 107 in accordance with Embodiment 8, the first electrode 71 and the second electrode 72 are disposed at the circumferential wall 57 of the cover 5 covering an outer circumferential surface of the lens 4, so as to face each other with the lens 4 interposed therebetween. As such, with the monitoring device 107, a dielectric barrier discharge can be generated inside the cover 5, and dust D that has intruded into the inside of the cover 5 and is adhering to the lens 4 can be removed by the dielectric barrier discharge.

### Embodiment 9

The following description will discuss another embodiment of the present invention. For convenience, members which are identical in function to the members described in the any of the above embodiments are given respective identical reference signs, and descriptions of those members are not repeated.

### (Configuration of monitoring device)

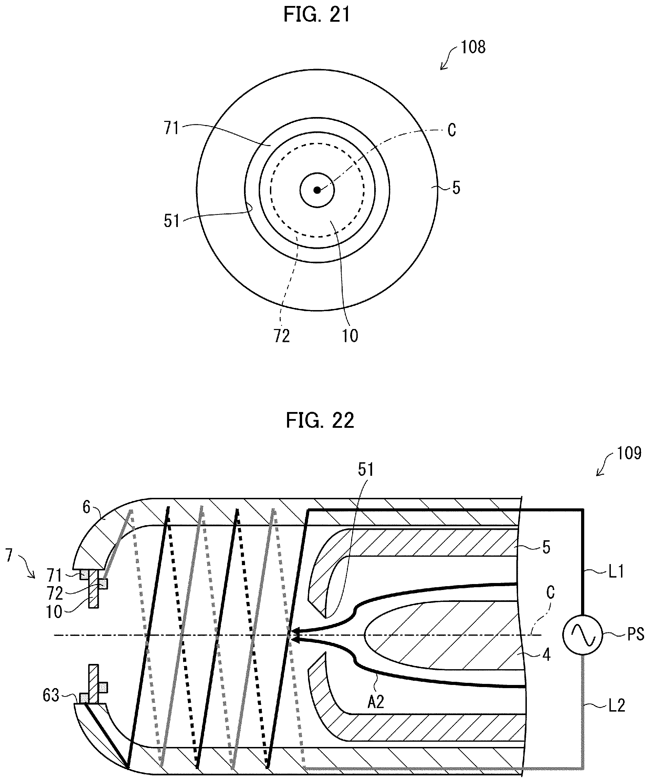

Fig. 20 is a cross section showing a main part of a monitoring device 108 in accordance with Embodiment 9. Fig. 21 is a schematic view of the monitoring device 108 illustrated in Fig. 20, which schematic view is obtained when the monitoring device 108 is viewed from a tip part side. The monitoring device 108 differs from the above-described monitoring devices primarily in including a dielectric plate 10 made of a dielectric (insulator).

As illustrated in Fig. 20, in the monitoring device 108, a plasma actuator 7 includes the dielectric plate 10 having an annular shape. The dielectric plate 10 is made of a dielectric (insulator) such as machinable ceramics, sapphire glass, or the like. The dielectric plate 10 has an annular shape (ring shape) having a center on a center axis C, and is installed in an opening 51 of a cover 5.

A first electrode 71 and a second electrode 72 each have an annular shape (ring shape) and are each disposed so as to have a center on the center axis C. The first electrode 71 is formed to have a diameter larger than that of the second electrode 72, and an inner diameter of the first electrode 71 is substantially equal to an outer shape of the second electrode 72.

The first electrode 71 and the second electrode 72 are disposed with the dielectric plate 10 interposed therebetween. The first electrode 71 is disposed on a front surface 10a of the dielectric plate 10, which front surface 10a is on a tip part side of the dielectric plate 10, and the second electrode 72 is disposed on a back surface 10b of the dielectric plate 10, which back surface 10b is on a base end part side (side opposite to the surface 10a) of the dielectric plate 10.

The plasma actuator 7 has the annular first electrode 71 and the annular second electrode 72 disposed in the manner described above such that the dielectric plate 10 is interposed between the first electrode 71 and the second electrode 72. As such, when a high-frequency voltage is applied by an AC power supply PS, a dielectric barrier discharge is generated along the front surface 10a of the dielectric plate 10, so that a plasma P is generated in the vicinity of an inner diameter side edge of the annular first electrode 71. Further, ambient air is induced by the plasma P, so that an induced jet flow F toward the center axis C is generated.

Thus, the plasma actuator 7 makes it possible to remove dust D that cannot be dealt with conventionally and thus to improve narrowing of the field of view of the monitoring device 100 caused by adherence of the dust D.

### (Effect of monitoring device)

As described above, in the monitoring device 108 in accordance with Embodiment 9, the first electrode 71 and the second electrode 72 are disposed on the dielectric plate 10, which is disposed in the opening 51 of the cover 5, such that the dielectric plate 10 is interposed between the first electrode 71 and the second electrode 72. As such, with the monitoring device 108, it is possible to generate a dielectric barrier discharge at the opening 51 of the cover 5 where adherence of dust D is particularly likely to occur, and to thereby remove the dust D.

### Embodiment 10

The following description will discuss another embodiment of the present invention. For convenience, members which are identical in function to the members described in the any of the above embodiments are given respective identical reference signs, and descriptions of those members are not repeated.

### (Configuration of monitoring device)

Fig. 22 is a cross section showing a main part of a monitoring device 109 in accordance with Embodiment 10. The monitoring device 109 differs from the above-described monitoring devices primarily in that a first wire L1 and a second wire L2 are disposed on an inner circumferential surface of an attachment 6 or inside a circumferential wall of the attachment 6.

As illustrated in Fig. 22, in the monitoring device 109, the first wire L1, which electrically connects a first electrode 71 and an AC power supply PS to each other, is spirally disposed on the inner circumferential surface of the attachment 6 made of an insulator. The second wire L2, which electrically connects a second electrode 72 and the AC power supply PS to each other, is disposed spirally on the inner circumferential surface of the attachment 6, which has a tubular shape. Thus, the first wire L1 and the second wire L2 are disposed in a double spiral shape on the inner circumferential surface of the attachment 6.

The first wire L1 and the second wire L2 are thus disposed on the inner circumferential surface of the attachment 6, thereby eliminating the processing for forming a through hole 64 (see Fig. 2) for wiring in the attachment 6, for example. Further, it becomes unnecessary to wire the first wire L1 and the second wire L2 through an outside of the attachment 6, and the first wire L1 and the second wire L2 are therefore not exposed to an outside of the monitoring device 109.

### (Effect of monitoring device)

As described above, in the monitoring device 109, the first wire L1 and the second wire L2 are disposed on the inner circumferential surface of the attachment 6 or inside the circumferential wall of the attachment 6. As such, with the monitoring device 109, processing of the attachment 6 can be facilitated, and safety of the monitoring device 109 can be improved.

### Embodiment 11

The following description will discuss another embodiment of the present invention. For convenience, members which are identical in function to the members described in the any of the above embodiments are given respective identical reference signs, and descriptions of those members are not repeated.

### (Configuration of monitoring device)

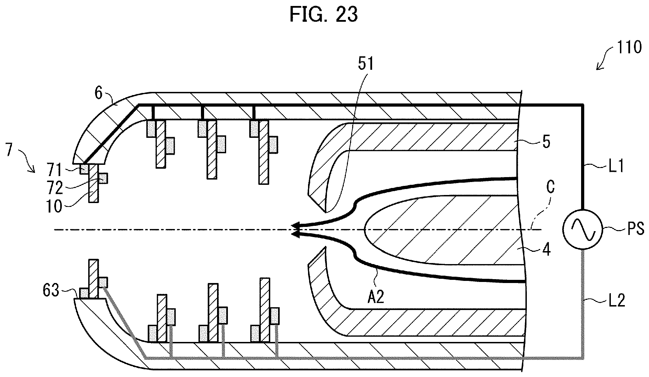

Fig. 23 is a cross section showing a main part of a monitoring device 110 in accordance with Embodiment 11. The monitoring device 110 differs from the above-described monitoring devices primarily in that a plurality of plasma actuators 7 are disposed so as to be spaced apart from each other.

As illustrated in Fig. 23, the monitoring device 110 includes a plurality of (four in the example of Fig. 23) plasma actuators 7 each including a first electrode 71, a second electrode 72, and a dielectric plate 10. The plurality of plasma actuators 7 are disposed on an attachment 6 so as to have a center on a center axis C. One of the plurality of plasma actuators 7 is disposed in an opening 63 of the attachment 6 or on an inner circumferential surface of the attachment 6 in the vicinity of the opening 63. Of the plurality of plasma actuators 7, three plasma actuators 7 are disposed on the inner circumferential surface of the attachment 6 at intervals in a direction of the center axis C.

The electrodes of each of the plasma actuators 7 are electrically connected to an AC power supply PS via a first wire L1 and a second wire L2 which are disposed on the inner circumferential surface of the attachment 6 or inside the circumferential wall of the attachment 6.

The three plasma actuators 7 provided on the inner circumferential surface of the attachment 6 gradually increase in width of the dielectric plate 10 (width of the cover 5 in a radial direction) from a tip part side toward a base end part side such that the dielectric plate 10 located at the tip part side has the smallest width, and the dielectric plate 10 located at the base end part side has the largest width. As such, the closer the plasma actuator 7 is to the cover 5, the more efficiently the plasma P and the induced jet flow F caused by a dielectric barrier discharge can be directed toward the center axis C.

### (Effect of monitoring device)

As described above, the monitoring device 110 in accordance with Embodiment 11 includes the plurality of plasma actuators 7. Thus, the monitoring device 110 allows for more dielectric barrier discharges to be generated. Further, with the monitoring device 110, by controlling each plasma actuator 7 so as to maximize an induced jet flow F, it is possible to adjust a timing of generation of an electric barrier discharge.

The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

3: Camera
4: Lens (light guide part)
5: Cover (second electrode)
6 Attachment
7: Plasma actuator
11: Inside of furnace
71: First electrode
72: Second electrode
100, 100a to 100c, 101 to 104, 104a, 105, 105a, 106 to 110: Monitoring device
D: Dust
F: Induced jet flow (jet flow)
P: Plasma

## Claims

1. A monitoring device for monitoring an inside of a furnace, comprising:
a light guide part guiding light from the inside of the furnace to a camera;
a cover having a tubular shape, covering a circumferential surface of the light guide part, and having, in a tip part of the cover on a side of the inside of the furnace, an opening that lets light pass therethrough; and
a plasma actuator including a first electrode that generates, toward a center axis of the cover, at least one of (i) a plasma generated by a dielectric barrier discharge and (ii) a jet flow induced due to the plasma, the plasma actuator removing, with use of at least one of the plasma and the jet flow, dust adhering to a surface of the monitoring device which surface faces the inside of the furnace or to an inside of the monitoring device.

2. The monitoring device as set forth in claim 1, wherein the first electrode is disposed at the opening or in a position closer to the inside of the furnace than the opening.

3. The monitoring device as set forth in claim 2, wherein:
the first electrode included in the plasma actuator has an annular shape; and
the first electrode is disposed concentrically with the opening.

4. The monitoring device as set forth in claim 2, wherein:
the first electrode included in the plasma actuator being two first electrodes; and
the two first electrodes are disposed with the center axis interposed therebetween.

5. The monitoring device as set forth in claim 2, wherein:
the plasma actuator further includes a second electrode; and
the first electrode and the second electrode are disposed with the center axis interposed therebetween.

6. The monitoring device as set forth in any one of claims 1 to 5, further comprising an attachment that is open at a position corresponding to the opening,
the plasma actuator being provided to the attachment.

7. The monitoring device as set forth in claim 6, wherein the attachment is made of a dielectric.

8. The monitoring device as set forth in claim 1, wherein the first electrode is disposed at a circumferential wall of the cover covering the circumferential surface and generates at least one of the plasma and the jet flow toward the light guide part.

9. The monitoring device as set forth in claim 8, wherein:
the plasma actuator further includes a second electrode; and
the first electrode and the second electrode are disposed with the light guide part interposed therebetween.
